(19) Europäisches Patentamt
European Patent Office
Office européen des brevets

(11) EP 2 289 950 B1

## (12) EUROPEAN PATENT SPECIFICATION

(45) Date of publication and mention
of the grant of the patent:
**05.03.2014 Bulletin 2014/10**

(51) Int Cl.:
*C08F 4/655* *(2006.01)*        *C08F 4/685* *(2006.01)*
*C08F 210/16* *(2006.01)*

(21) Application number: **09168558.6**

(22) Date of filing: **25.08.2009**

(54) **Improved ethylene polymerization catalyst composition**

Verbesserte Ethylenpolymerisationskatalysatorzusammensetzung

Composition de catalyseur de polymérisation d'éthylène amélioré

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**02.03.2011 Bulletin 2011/09**

(73) Proprietor: **Borealis AG**
**1220 Vienna (AT)**

(72) Inventors:
• **Garoff, Thomas**
**00840, Helsinki (FI)**

• **Waldvogel, Päivi**
**06450, Porvoo (FI)**

(74) Representative: **Kador & Partner**
**Corneliusstrasse 15**
**80469 München (DE)**

(56) References cited:
**EP-A1- 0 493 637        EP-A1- 2 030 991
WO-A2-01/00685        US-A- 5 442 018
US-A- 5 777 050**

**Description**

The invention relates to a Ziegler-Natta catalyst composition which is suitable for the production of ethylene polymers, particularly linear low density polyethylene.

More specifically, the present invention relates to a Ziegler-Natta catalyst composition capable of producing ethylene/alpha-olefins copolymers, particularly linear low density polyethylene, and the composition having increased comonomer sensitivity, respectively response. The composition comprises an improved solid vanadium-containing Ziegler-Natta procatalyst and a halogenated aluminium alkyl as cocatalyst.

Various Ziegler-Natta catalyst compositions have already been examined to manufacture LLDPE as for example described in WO 2009/027379.

In WO 2009/027379 vanadium and titanium containing Ziegler-Natta procatalysts, using the special $MgCl_2$-carrier consisting of $MgCl_2/Et-Al-(O-R)_2$ as described in WO2004/055068 or by using the special emulsion/solidification method for preparing the solid procatalyst as described in WO 03/106510, for producing ethylene copolymers with higher $\alpha$-olefins, such as $C_3$ - $C_{10}$ $\alpha$-olefins is described. According to WO 2009/027379 these ZN-procatalysts produce polymers where the titanium centre makes lower molecular weight polymer homopolymer (because of higher hydrogen sensitivity and poor comonomer response) and vanadium is taking care of high molecular weight polymer having high comonomer content (vanadium site can make high molecular weight with very high comonomer response) and having an improved comonomer distribution. As cocatalysts organometallic compounds selected from the group consisting of aluminium alkyls, mixtures of aluminium alkyl compounds, aluminium alkyl halides and aluminium alkoxy compounds are disclosed. In the examples only tri-iso-butyl-aluminium (TIBA) is used as cocatalysts.

One disadvantage of the Ziegler-Natta catalyst compositions used in WO 2009/027379 is the relatively low activity and fast deactivation of the vanadium component in these (V+Ti)-$MgCl_2$-based Ziegler-Natta procatalysts, which leads to a decrease in comonomer sensitivity, respectively response.

Although the examples of WO 2009/027379 show good results in respect to comonomers incorporation, there is a continuous need for alternative or improved solid ZN catalyst compositions with desirable properties, such as increased comonomer sensitivity, respectively response.

It has now surprisingly been found that these objects are achieved by a Ziegler-Natta catalyst composition comprising a special procatalyst containing special $MgCl_2$-carrier consisting of $MgCl_2/Et-Al-(O-R)_2$ as described in WO2004/055068 and a halogenated aluminium alkyl as cocatalyst.

Thus viewed from a first aspect the invention provides a Ziegler-Natta polymerization catalyst composition for the (co)polymerization of ethylene, said catalyst composition comprising

  1) a solid procatalyst formed by contacting at least:

    a) a Mg-alcoholate compound of the formula (I):

      $Mg(OR^1)_{2-n}(R^1)_n$, wherein each $R^1$ independently represents a $C_1$-$C_{20}$ hydrocarbyl group and $0 \leq n < 2$ and may or may not be an integer;

    b) an aluminium compound of the formula (II)

      $Al(R^2)_m X_{3-m}$, wherein each $R^2$ independently represents an alkyl of 1 to 6 carbon atoms; each X is independently a halogen; $0 \leq m < 3$ and m and may or may not be an integer

    c) a vanadium compound and a titanium compound in portions such as to provide a molar ratio of V:Ti from 20:80 to 80:20
    in order to yield the solid procatalyst and

  2) a halogenated aluminium alkyl cocatalyst of the formula (III) $(C_1$-$C_4$-alkyl)p-Al-$X_{3-p}$, wherein X is chlorine, bromine, iodine or fluorine and p is 1 or 2.

It has been found that the special ZN-catalyst composition allows for the production of LLDPE with improved properties as herein described.

As stated above, solid procatalysts are formed by contacting at least a) a Mg-alcoholate compound of the formula (I), b) an aluminium compound of the formula (II) and c) a vanadium compound and a titanium compound.

For forming the solid procatalyst including preparing a special $MgCl_2$-carrier consisting of $MgCl_2/Et-Al-(O-R)_2$ as support, the method of contacting components a), b) and c) as described in WO2004/055068 is used.

According to this method the solid procatalyst is prepared by contacting

[A] a solid magnesium aluminium complex containing magnesium, halogen and aluminium with

[B] a vanadium compound and a titanium compound in portions such as to provide a molar ratio of V:Ti from 20:80 to 80:20

First the solid magnesium aluminium complex (= catalyst support) containing magnesium, halogen and aluminium is described below:
Said complex is obtained by

(a1) adding a solution of a magnesium compound of the formula (I):

$Mg(OR^1)_{2-n}(R^1)_n$, wherein each $R^1$ independently represents a $C_1$-$C_{20}$ hydrocarbyl group and $0 \leq n < 2$ and may or may not be an integer;

to a solution of a compound of formula (II): $Al(R^2)_m X_{3-m}$, wherein each $R^2$ independently represents an alkyl of 1 to 6 carbon atoms; X is independently a halogen; $0 \leq m < 3$ and m and may or may not be an integer,

(a2) separating the solidified reaction product from the reaction mixture and washing the product with a wash solution until a molar ratio of aluminium to magnesium has a value of at least 0.3

Such complexes are known, for example from WO 2004/055068. Their preparation is done as described in WO 2004/055068.
Accordingly, the catalyst support prepared according to this method comprises a reaction product formed at least from:

1) Compound (1): A magnesium hydrocarbyloxy compound of a general formula (I):

$$Mg(OR^1)_{2-n}(R^1)_n,$$

wherein each $R^1$ is independently a $C_{1-20}$ hydrocarbyl group, e.g. a $C_{2-15}$ group, preferably a $C_{3-10}$ group, such as a $C_{4-10}$ group, suitably a $C_{4-10}$ group e.g. an alkyl, cycloalkyl, alkylcycloalkyl, cycloalkylalkyl, aryl, arylalkyl, or alkylaryl, wherein "alkyl" used as alone or as part of another option can be linear or branched and "aryl" is preferably of 5-12 carbon ring atoms, suitably phenyl or naphthyl; e.g. each $R^1$ is independently an ethyl, propyl, butyl, pentyl, hexyl, heptyl, octyl;

and $0 \leq n < 2$ and n may or may not be an integer.

In a preferred embodiment of the invention, a magnesium hydrocarbyloxy compound of formula $Mg(OR^1)_{2-n}(R^1)_n$ (I), wherein each $R^1$ is independently as defined above; is used, which may be commercially available or, preferably, is a reaction mixture of a magnesium alkyl compound of formula $Mg(R^1)_2$ (IV), wherein each $R^1$ independently is as defined above, with an alcohol $R^1OH$, wherein $R^1$ is as defined above;
and

2) Compound (2): A halogen-containing compound of formula (II):

$$Al(R_2)_m X_{3-m},$$

wherein each $R^2$ independently represents an alkyl of 1 to 6 carbon atoms, preferably up to 4 carbon atoms; and each X is independently a halogen, preferably a chlorine; $0 \leq m < 3$ and m may or may not be an integer; e.g. dialkyl aluminium chlorides, such as dimethyl aluminium chloride, diethyl aluminium chloride, diisobutyl aluminium chloride, or alkyl aluminium dichlorides, such as ethyl aluminium dichloride (EADC) or methyl aluminium dichloride;

Preferably, the support consists of the reaction product of compound (1), optionally prepared from compound (IV) and $R^1OH$ as defined above, and of compound (2).
A solution of the compound(s) (1) is added to the solution of compound(s) (2) to cause the solidification (precipitation) of the solid reaction product. A slowly addition under mixing is preferred. By slowly addition it is meant herein that the solution (1) is added gradually, e.g. drop wise or other similar means, to cause a uniform solidification reaction as known in the art.

A solution (1) containing a magnesium hydrocarbyloxy compound of formula $Mg(OR^1)_{2-n}(R^1)_n$ (I), wherein $R^1$ is as defined above; and $0 \leq n < 2$, is prepared first:

by contacting, in a hydrocarbon solvent (e.g. heptane), a compound of formula $Mg(R^1)_2$ (IV), wherein $R^1$ is as defined above under formula (I), e.g. each $R^1$ is independently methyl, ethyl, propyl, butyl, pentyl, hexyl, heptyl or octyl, e.g. di(n-butyl) magnesium, n-butyl sec-butyl magnesium, butyl ethyl magnesium or butyl octyl magnesium, preferably butyl octyl magnesium (BOMAG),

with an alcohol of formula $R^1OH$, wherein $R^1$ is as defined above under formula (I), suitably a cycloalkyl, cycloalkylalkyl, aryl, alkylaryl, arylalkyl or alkyl, each containing from 2 to 15, preferably from 3 to 10 carbon atoms. Preferably $R^1$ is a $C_{3-15}$ cycloalkyl or branched or unbranched $C_{3-15}$ alkyl, preferably a $C_{4-10}$ cycloalkyl or a branched or unbranched $C_{4-10}$ alkyl, such as cyclopentanol, 2-methyl-2-propanol, 2-ethyl-1-butanol, 2-methyl-1-pentanol, 2-ethyl-pentanol, 2-ethyl-1-hexanol, n-heptanol, n-octanol and decanol, preferably 2-ethyl-1-hexanol. The alcohols which are usable to transform the magnesium hydrocarbyl to a magnesium hydrocarbyloxy compound soluble in a hydrocarbon solvent, are known in the art or can be readily determined by a skilled person. Said contact is effected in a temperature between 0 and 100 °C, preferably at 10 to 40 °C, e.g. at 20 to 30 °C. The reaction can be completed by heating the system at 50 to 100 °C for 10 to 100 min. Preferably the alcohol is added to the Mg solution. The molar ratio of Mg dihydrocarbyl to $R^1OH$ (Mg:$R^1OH$) is preferably from 1:1 to 1:4, more preferably 1:1 to 1:3.5, e.g. 1:1.5 to 1:3.5, especially 1:1.8 to 1:3.1.

The solution (2) of the halogen-containing compound is prepared by dissolving in a hydrocarbon solvent as defined below (e.g. toluene) a compound of formula

$$Al(R^2)_m X_{3-m} \qquad \text{(II)},$$

wherein each $R^2$ is independently as defined above, preferably an alkyl of 1 to 6, such as 1 to 4, carbon atoms; and each X is independently a halogen, such as chlorine; and m may or may not be an integer $0 \leq m < 3$; e.g. dimethyl aluminium chloride, diethyl aluminium chloride, diisobutyl aluminium chloride, ethyl aluminium dichloride and methyl aluminium dichloride, preferably ethyl aluminium dichloride (EADC). Such solutions may also be commercially available, whereby they may be further diluted, if desired, with a solvent as defined below.

The prepared reaction mixture (1), i.e. Mg-hydrocarbyloxy-containing solution (1), is then added slowly to the obtained Al solution (2).

It has been found that in order to achieve beneficial properties of the support material, the obtained solid reaction product should be recovered from the reaction mixture of solution (1) and (2) before the use as a support.

The recovery step can be effected in various ways including the separation of the solid reaction product from the liquid reaction medium, e.g. by filtration, decantation or suction, and washing the solid product with a wash solution e.g. in a manner known in the art, before it is used as a support material.

It is evident for a skilled person that the washing efficiency can be varied within the scope of the invention depending on the desired washing effect and can be controlled e.g. by the number of the washing steps, the temperature, the solvent(s) used for washing, the amount of the wash solution and the washing time. The wash temperature can be e.g. 0 to 100 °C, suitably 20 to 100 °C, e.g. 40 to 80 °C, such as 55 - 70 °C. Thus the duration of a washing (e.g. the mixing time of the slurry in a wash solution) depends on the desired effect and can be chosen accordingly. The washing effect depends on the separation efficiency of the solid material from the solution.

Ad Solutions of the Starting Compounds:

The term "solution" is understood herein broadly to include solutions prepared from (a) one or more of the support forming compounds in liquid form (liquid at the room temperature or a melt prepared at a higher temperature) and/or (b) from an organic solvent(s).

The solutions are suitably formed using an organic solvent that dissolves the compounds. Preferred solvents include inert hydrocarbons, e.g. linear or branched aliphatic, alicyclic or aromatic $C_{5-20}$ hydrocarbons, preferably $C_{6-12}$ hydrocarbons, wherein the ring systems may contain hydrocarbon, e.g. $C_{1-6}$ alkyl substituents, such as cyclohexane, hexane, heptane, octane or toluene, or any mixtures thereof. E.g. linear or branched alkanes, e.g. hexane, heptane or octane, may be used.

Ad Wash Solution:

As the wash solution, e.g. any organic solvent or mixtures thereof known in the art can be used. Preferable solvents include hydrocarbons as defined above, e.g. pentane, hexane or heptane, particularly heptane.

Further treatment steps of the solid reaction product may also be possible after the combination of solutions (1) and (2) (i.e. after the precipitation reaction) before or during the recovery step of the invention. Such treatment includes e.g. a heating step of the reaction mixture after the solidification at an elevated temperature, e.g. up to 100 °C, such as 40 to 80 °C, suitably 50 to 75 °C, for a suitable period of time, such as from 5 minutes to 24 hours, e.g. 10 to 720 minutes, such as 20 to 360 minutes, before the recovery step.

In a preferable embodiment, the molar ratio of aluminium to magnesium in the catalyst support material of the invention is at least 0.3 ($\geq$ 0.3). Preferably the molar ratio of aluminium to magnesium is at least 0.4 ($\geq$ 0.4), or preferably at least 0.5 ($\geq$ 0.5), or at least of 0.6 ($\geq$ 0.6). Said ratios result in a catalyst with very good morphology and reduced amount of fines content of the produced polymer product. In a further embodiment of the invention said molar ratio may be even at least 0.7 ($\geq$ 0.7) or 0.80 ($\geq$ 0.80), such as 0.85 ($\geq$ 0.85), depending on the properties desired for the catalyst. In principle, the upper limit of said ratio range is not limited, but may be e.g. 1.1. In one preferred embodiment said upper limit of said molar ratio is 0.99. The above-said molar ratio can be determined in a known manner, e.g. using flame atomic absorption method with e.g. a nitrous oxide/acetylene flame.

The molar ratio of aluminium to magnesium in the support material is adjusted to a desired range by means of the recovery step of the invention, i.e. by separating the solids from the liquid reaction medium and by washing the solids as described above. Particularly, the obtained solid reaction product is washed with a wash solution, and the washing procedure can be repeated, if needed, until the desired ratio is obtained. The ratio can be monitored between the washings, if needed, e.g. by analysing the support samples in a conventional manner the relevant contents of the reaction product or the reaction medium, e.g. the mol-% of Mg and the mol-% of Al in the formed carrier material.

After the recovery step of the invention, the solid reaction product can be used as a support material for further catalytically active compounds, such as vanadium and titanium to form a final polymerization catalyst component, such as the solid ZN-procatalyst used according to the invention.

Accordingly, in the method for preparing the solid Ziegler-Natta procatalyst of the invention, the catalyst support, prepared as described above, is suspended in an organic solvent and treated with a vanadium compound and a titanium compound. The treatment step is preferably effected in a manner known in the art.

The vanadium compound employed for the preparation of the procatalyst is soluble in the liquid hydrocarbon and should be of quadrivalent at highest, or VO vanadyl group of trivalent at most. The vanadium compound employed therefore may be a compound which has either of the two general formulae $V(OR)_{4-q}X_q$ or $VO(OR)_{3-r}X_r$ in which formulae R denotes an alkyl group containing from 1 to 12 carbon atoms, X a halogen atom, such as bromine or chlorine, q an integral or fractional number ranging from 0 to 4 and r an integral of fractional number ranging from 0 to 3. Advantageously, one or more compounds can be employed, chosen from vanadium tetrachloride, vanadyl trichloride, vanadyl tri-n-propoxide, vanadyl triisopropoxide and vanadium tetra-n-propoxid.

Preferably vanadium tetrachloride is used.

The titanium compound employed for the preparation of the procatalyst is also soluble in the liquid hydrocarbon and is, in general, a compound in which the titanium has its maximum valency, that is to say valency 4. The titanium compound employed may be a compound of the general formula $Ti(OR)_{4-s}X_s$ in which formula R denotes an alkyl group containing from 1 to 12 carbon atoms, X a halogen atom, such as bromine or chlorine, and s an integral or fractional number ranging from 0 to 4. Among these compounds, titanium tetrachloride or titanium tetraisopropoxide can be employed.

Preferably titanium tetrachloride is used.

The quantity of vanadium and titanium compound which are employed to prepare the procatalyst is in particular such that the molar ratio of V:Ti is from 20:80 to 80:20, preferably from 25:75 to 75:25, more preferably 40:60 to 60:40 and most preferably 50:50.

If it is referred to e.g. a 50/50% V/Ti catalyst, this means therefore 50/50 mol/mol V/Ti in the catalyst preparation step and not in the final catalyst.

Generally, in the final solid procatalyst particles, the molar ratio of Mg:(V+Ti) can be e.g. between 10:1 to 1:10, preferably less than 6:1, such as between less than 6:1 and 1:1.

The molar ratio of (V+Ti):Al can be e.g. between 20:1 to 1:2, e.g. 5:1 to 1:1. The ratios can be determined in a manner known in the art.

The final procatalyst, e.g. the ZN procatalyst, thus obtained is combined with further catalyst component(s) conventionally used in the art, such as a cocatalyst and optionally (internal) electron donors, additional activators and/or modifiers. Said further catalyst component(s) can be combined with the present procatalyst during the preparation method of the present procatalyst or during the actual polymerization step by adding the procatalyst of the invention and the further component(s) separately into a reactor.

Preferably no internal electron donor is added.

Preferably the solid procatalysts have an average particles size in the range of 2 to 200 $\mu$m, more preferably from 5 to 150 $\mu$m and most preferably from 10 to 50 $\mu$m.

The second component of the Ziegler-Natta catalyst composition is the halogenated aluminium alkyl cocatalyst of formula (III) $(C_1-C_4\text{-alkyl})p\text{-Al-}X_{3-p}$, wherein X is chlorine, bromine, iodine or fluorine and p is 1 or 2.

The $C_1-C_4$-alkyl groups can be linear or branched or cyclic, or a mixture of such groups.

X is preferably chlorine or bromine, most preferably X is chlorine.

Suitable cocatalysts are for example dimethyl aluminium chloride (DMAC), diethyl aluminium chloride (DEAC), diisobutyl aluminium chloride (DIBAC), ethyl aluminium dichloride (EADC), methyl aluminium dichloride (MADC).

A preferred cocatalyst according to the invention is DEAC.

In the ZN polymerization catalyst composition used according to the present invention, the molar ratio between the aluminium in said cocatalyst and the vanadium+titanium of said procatalyst is preferably 1:1 - 100:1, more preferably 2:1 - 50:1 and most preferably 3:1 - 40:1.

The procatalyst and the cocatalyst may be contacted with each other prior to their introduction into the polymerization reactor. However, it is equally well possible to introduce the two catalyst components separately into the reactor.

It should be further mentioned that the special vanadium-containing Ziegler-Natta catalyst used according to the invention does not need any kind of promoter (like halogenated hydrocarbons).

The Ziegler-Natta catalyst composition according to the present invention, comprising a special procatalyst (A) and a halogenated aluminium alkyl as cocatalyst B) shows an increased comonomer sensitivity compared to conventional Ziegler-Natta catalyst composition using a non-halogenated cocatalyst.

The Ziegler-Natta catalyst composition according to the present invention is thus especially suitable for a process for the production of an ethylene copolymer in which ethylene and $C_3-C_{20}$-alpha olefin monomers are copolymerized in the presence of the catalyst composition of the invention.

Preferably, in the process an ethylene copolymer is produced, more preferably, ethylene monomers are copolymerized with one or more alpha-olefin comonomers units.

The alpha-olefin comonomer units of polyethylene resins preferably are selected from $C_3-C_{20}$-alpha-olefins, more preferably are selected from $C_3-C_{12}$-alpha-olefins, still more preferably are selected from $C_4-C_{10}$-alpha-olefins, such as 1-butene, isobutene, 1-pentene, 1-hexene, 4-methyl-1-pentene, 1-heptene, 1-octene, 1-nonene, 1-decene and 1-eicosene, as well as dienes, such as butadiene, 1,7-octadiene and 1,4-hexadiene, or cyclic olefins, such as norbornene, and any mixtures thereof.

Most preferably, the comonomer is 1-butene and/or 1-hexene.

The comonomer content of the ethylene copolymers can vary in wide ranges depending on the desired polymer properties. Thus, the comonomer content can vary from very low levels, as example from below 0.1 wt% up to very high amounts, like at least up to 30 wt% or above. In addition, polymer with wide range of MFR can be produced, e.g. from $MFR_2$ from 0.1 to 2000 g/10 min to $MFR_{21}$ from 0.01 to 100 g/10 min. (190 °C, 2.16 and 21 kg load, respectively).

The catalyst systems hereinbefore described are according to the invention employed in a one-stage or multi-stage, preferably two-stage polymerization. In such a multi-stage polymerization the reactors are preferably connected in series such that the products of one reactor are used as the starting material in the next reactor.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors.

The polymerization may be carried out continuously or batch wise, preferably the polymerization is carried out continuously.

The polyethylene copolymer can further show unimodal, bimodal or multimodal molecular weight distribution.

Unimodal polymers can be produced in a one stage polymerization, although more than one stage is possible, but then polymers with approximately the same molecular weight are produced in each stage. Any type of polymerizations as listed above is possible.

Bimodal or multimodal polyethylene copolymers can be produced in dual or multi-stage and - reactor processes which are known in the art.

Different combinations for producing multimodal polymers can be used, e.g. gas-gas phase, slurry-slurry phase, slurry-gas phase processes; slurry-gas phase polymerization being a preferred one.

Multimodal polymers with respect to the molecular weight distribution (MWD) are produced in a multistage process, where lower molecular weight and higher molecular weight polymers (components) are produced in different polymerization steps, in any order.

If the lower molecular weight component is produced in the first stage and the higher molecular weight component thus being produced in the second step, this is called normal mode.

On the contrary, if the lower molecular weight component is produced in the second stage and the higher molecular weight component thus being produced in the first step, this is called reverse mode.

Preferably the process according to the invention is run in the normal mode.

More preferably the production of the lower molecular weight and higher molecular weight components is carried out as a combination of slurry polymerization for the lower molecular weight component and gas phase polymerization for the higher molecular component.

Thus the first stage is carried out in the slurry phase and produces preferably the lower molecular weight component. The second stage can be carried out in a gas phase or in a slurry phase, but is preferably carried out in the gas phase. Preferably the second stage produces the higher molecular weight component. In a preferred polymerization process one slurry phase stage is followed by one gas phase stage.

The slurry and gas stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

Optionally the process according to the invention can comprise one or two additional polymerization steps.

These optional one or two additional polymerization steps preferably comprise gas phase polymerization steps.

The reactor system may additionally comprise other reactors, e.g. for pre-polymerization. Pre-polymerization may be used, for example, to provide the catalyst in a solid particulate form or to activate the catalyst. In a typical pre-polymerization, monomer (e.g. ethylene) is polymerized with the catalyst system, as hereinbefore described, to yield, for example, 0.1 to 1000 g polymer per gram of catalyst. The polymer formed during pre-polymerization forms less than 10 % by weight, preferably less than 7 % by weight, typically less than 5 % by weight of the total weight of the final polymer. Still more preferably only 2-3 % of the total weight of the polymer is formed during any pre-polymerization step. A pre-polymerization is therefore not intended to represent one of the stages of the polymerization processes hereinbefore described.

A preferred multistage process for producing ethylene (co)polymers is a "loop-gas phase"-process, such as developed by Borealis (known as BORSTAR® technology) described e.g. in patent literature, such as in EP 0 517 868, EP 0 887 379.

For slurry reactors the polymerization medium typically comprises ethylene, optionally a comonomer, a diluent and a catalyst system as hereinbefore described. The diluent used will generally be an aliphatic hydrocarbon having a boiling point in the range -70 to +100 °C. Preferred diluents include hydrocarbons such as propane, n-butane or isobutane, with propane as particularly preferred. Hydrogen is also preferably fed into the reactor to function as a molecular weight regulator. In a typical slurry phase polymerization the temperature is preferably in the range 40 to 110 °C, preferably 60 to 100 °C and in particular 85 to 100°C.

The reaction pressure is typically 10 to 150 bar, preferably 15 to 100 bar.

In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture. When propane is used as a diluent an example of a suitable operating temperature is 95 °C and pressure 60 bar when employing supercritical conditions.

Polymerization in the first reactor (e.g. a loop reactor) is typically carried out for 10 to 300 minutes, preferably 20 to 120 minutes and the most preferably 30 to 90 minutes.

At least part of the volatile components of the reaction medium (e.g. hydrogen) may then be removed. The product stream is then subjected to a second polymerization stage.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

The second polymerization is preferably carried out using the same catalyst system as hereinbefore described in the first stage (i.e. no fresh catalyst is added in the second stage). In the second polymerization stage for producing bimodal polyethylene copolymer preferably the higher molecular weight component of the polyethylene copolymer is produced. The second stage is preferably carried out in the gas phase. The polymer produced in the second stage is preferably a copolymer.

As gas phase reactors preferably fluidized bed gas phase reactors, fast fluidized bed gas phase reactors or settled bed gas phase reactors can be used.

Ad fluidized bed gas phase reactors:

In a fluidized bed gas phase reactor an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer (s), eventual chain growth controllers or chain transfer agents, such as hydrogen, and eventual inert gas.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

The reactor may also include a mechanical agitator to further facilitate mixing within the fluidized bed. An example of suitable agitator design is given in EP-A-707513.

Ad fast fluidized bed reactor:

In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles.

Ad settled bed reactor:

In the settled bed the polymer flows downward in a plug flow manner in an environment containing reactive components in gaseous phase. The polymer powder is introduced into the bed from the top from where it flows downwards due to gravity.

Polymerization in settled bed is disclosed, among others, in EP-A-1633466, EP-A-1484343 and WO-A-97/04015.

In the process according to the invention preferably a fluidized bed gas phase reactor is used for the second polymerization step.

For gas phase reactors used according to the invention, the reaction temperature used will generally be in the range 60 to 115 °C (e.g. 70 to 110 °C), the reactor pressure will generally be in the range 10 to 30 bar, and the residence time will generally be 0.5 to 8 hours. Preferably the residence time in the gas phase reactor is 1 to 4 hours, more preferably 1.5 to 3 hours.

The polymerization medium in the second stage typically comprises ethylene, comonomers (e.g. 1-butene, 1-hexene, or octene), nitrogen, propane and optionally hydrogen.

If the polymerization process comprises one or two additional polymerization steps, these steps are preferably performed in gas phase reactors, as described above.

Any combination of gas phase reactors can be used.

For example, the polymerization product of the second polymerization step, which is either a fluidized bed polymerization step or a fast fluidized bed polymerization step, preferably a fluidized bed polymerization step is transferred into a third polymerization reactor, which is for example a settled bed polymerization reactor. The product from the third polymerization step is optionally transferred into a fourth reaction step, which uses for example again a fluidized bed polymerization reactor. From the fourth reaction reactor the polymer is recovered and sent to further processing.

The use of two or three subsequent fluidized bed polymerization reactors is a further possibility.

In any embodiment it is possible to feed additional procatalyst into any of the reaction zones respectively polymerization step. However, it is preferred that the solid procatalyst is introduced into the prepolymerization step only and that no fresh solid procatalyst is added into any reaction zone respectively polymerization step. Thus, the solid procatalyst entering a polymerization step comes from the preceding polymerization step(s) only. However, additional cocatalyst can be introduced into the reaction stages if necessary. This may be done, for instance, to increase the activity of the catalyst or to influence the isotacticity of the polymer.

Generally the quantity of catalyst composition used depends upon the nature of the catalyst composition, the reactor types and conditions and the properties desired for the polymer product.

The melt flow rate and the density as well as the molecular weight of the resulting ethylene copolymers can be controlled independently over wide ranges.

The advantage of using the catalyst system of the invention becomes especially apparent when producing linear low density ethylene polymers, having a density of from about 900 to 935 $kg/m^3$, preferably from 900 to 930 $kg/m^3$.

## Experimental and Examples

**1**. Definitions and Measurement Methods

**Melt flow rates ($MFR_5$ and $MFR_{21}$)** are measured under a load of 5kg and 21.6 kg, respectively, and at 190 °C according to ISO 1133.

## GPC: Molecular weight averages, molecular weight distribution, and polydispersity index (Mn, Mw, MWD, PDI)

Molecular weight averages (Mw, Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99. A Waters GPCV2000 instrument, equipped with differential refractive index detector and online viscosimeter was used with 2 x GMHXL-HT and 1x G7000HXL-HT TSK-gel columns from Tosoh Bioscience and 1,2,4-trichlorobenzene (TCB, stabilized with 250 mg/L 2,6-Di tert butyl-4-methyl-phenol) as solvent at 140 °C and at a constant flow rate of 1 mL/min. 209.5 $\mu$L of sample solution were injected per analysis. The column set was calibrated using universal calibration (according to ISO 16014-2:2003) with at least 15 narrow MWD polystyrene (PS) standards in the range of 1 kg/mol to 12 000 kg/mol. Mark Houwink constants for PS, PE and PP used are as per ASTM D 6474-99. All samples were prepared by dissolving 0.5 - 4.0 mg of polymer in 4 mL (at 140 °C) of stabilized TCB (same as mobile phase) and keeping for max. 3 hours at max. 160°C with continuous gentle shaking prior sampling into the GPC instrument.

**Density** of the polymer was determined according to ISO 1183-1987 on compression-moulded specimens.

**Comonomer content** of the obtained products was measured in a known manner based on Fourier transform infrared spectroscopy (FTIR) calibrated with $^{13}$C-NMR, using Nicolet Magna 550 IR spectrometer together with Nicolet Omnic FTIR software.

Films having a thickness of about 220 to 250 $\mu$m were compression moulded from the samples. Similar films were made from calibration samples having a known content of the comonomer. The thicknesses were measured from at least five points of the film. The films were then rubbed with sandpaper to eliminate reflections. The films were not touched by plain hand to avoid contamination. For each sample and calibration sample at least two films were prepared. The films were pressed from pellets by using a Graceby Specac film press at 150 °C using 3 + 2 minutes preheating time, 1 minute compression time and 4 to 5 minutes cooling time. For very high molecular weight samples the preheating time may be prolonged or the temperature increased.

The comonomer content was determined from the absorbance at the wave number of approximately 1378 $cm^{-1}$. The comonomer used in the calibration samples was the same as the comonomer present in the samples. The analysis was performed by using the resolution of 2 $cm^{-1}$, wave number span of from 4000 to 400 $cm^{-1}$ and the number of sweeps of 128. At least two spectra were run from each film.

The comonomer content was determined from the spectrum from the wave number range of from 1430 to 1100 $cm^{-1}$. The absorbance is measured as the height of the peak by selecting the so-called short or long base line or both. The short base line is drawn in about 1410 - 1320 $cm^{-1}$ through the minimum points and the long base line about between 1410 and 1220 $cm^{-1}$. Calibrations need to be done specifically for each base line type. Also, the comonomer content of the unknown sample needs to be within the range of the comonomer contents of the calibration samples.

## Elemental analysis of the catalysts

The elemental analysis of the catalysts was performed by taking a solid sample of mass, M, cooling over dry ice. Samples were diluted up to a known volume, Vol, by dissolving in nitric acid ($HNO_3$, 65 %, 5 % of Vol) and freshly deionised (DI) water (95 % of Vol), the samples were left to stabilise for two hours.

The analysis was run at room temperature using a Thermo Elemental IRIS Advantage XUV Inductively Coupled Plasma - Atomic Excitation Spectrometer (ICP-AES) which was calibrated immediately before analysis using a blank (a solution of 5 % $HNO_3$ in DI water), a low standard (10 ppm Al in a solution of 5 % $HNO_3$ in DI water, a high standard (100 ppm Mg, 50 ppm Al, 50 ppm Ti and 50 ppm V in a solution of 5 % $HNO_3$ in DI water) and a quality control sample (50 ppm Mg, 20 ppm Al, 20 ppm Ti and 20 ppm V in a solution of 5 % $HNO_3$ in DI water).

The content of aluminium was monitored via the 167.081 nm line, when Al concentration in ICP sample was between 0-10 ppm and via the 396.152 nm line for Al concentrations between 10-100 ppm. The magnesium concentration was monitored via the 285.213 nm line and the titanium content via the 323.452 nm line.

The content of vanadium was monitored using an average from the 292.402 nm and 310.230 nm lines.

The reported values, required to be between 0 and 100, or further dilution is required, are an average of three successive aliquots taken from the same sample and are related back to the original catalyst using equation 1.

$$C = (R \times Vol)/M \qquad\qquad \text{Equation 1}$$

Where:

C is the concentration in ppm, related to % content by a factor of 10,000

R is the reported value from the ICP-AES

Vol is the total volume of dilution in ml

M is the original mass of sample in g

If dilution was required then this also needs to be taken into account by multiplication of C by the dilution factor.

**Example 1: Catalyst preparation:**

**a) Preparation of the Mg-alcoholate complex**

The Mg-alcoholate was prepared in a larger batch. About 24 kg of the Mg-alcoholate complex was produced. The Mg-alcoholate complex synthesis was started by adding 16.0 kg (472 g Mg, 19.42 mol Mg) of 20 % heptane solution of $(C_4H_9)_{1,5}Mg(C_8H_{17})_{0,5}$ (BOMAG, 2.95 % Mg) into a multipurpose reactor at room temperature. To this solution 4.92 kg (37.79 mol) of 2-ethyl-hexanol (EHA) was added slowly at room temperature. The Mg/EHA molar ratio in this mixture was 1:1.945. The temperature was held at about room temperature and the reactants were allowed to react with each other for 108 min. 3.75 kg (52.1 mol) of n-pentane was added at room temperature to reduce viscosity and the Mg-alcoholate complex was allowed to stabilise for 120 min at 20 - 30°C. After this the Mg-alcoholate solution was allowed to temperate back to room temperature. Analyses showed that the Mg-alcoholate complex had a concentration of 2.4 % Mg.

**b) Preparation of the $MgCl_2$ support material**

25 ml of heptane ($C_7$) was first added to a 250 ml glass reactor. Then 38.2 g of a 20 w% pentane solution of EADC was added. Afterwards a Mg-complex solution, as prepared above, was added drop by drop with a syringe during 45 min into the reaction solution at room temperature in a molar proportion of 1:1 referring to EADC. The Mg/Al molar ratio in this mixture was about 2:1. After this the temperature was adjusted to 75°C and the reactants were allowed to react with each other. After reaction, the precipitate was allowed to settle for 30 min and then the liquid was siphoned off and the support washed twice with heptane at 60°C. The wash solution was then siphoned off. The support-heptane slurry had a Mg content of 1.06 wt%.

**Preparation of Catalyst A**

Catalyst A was prepared by taking 10 g of the previously prepared support material into a vessel provided with a mixing device. In a separate vessel 0.06 ml of $VCl_4$ and 0.18 ml of $TiCl_4$ were mixed and then added in the vessel with the support in heptane. The Mg/(V + Ti) molar ratio was 2:1. The slurry was mixed over night at room temperature. After this the catalyst was separated from the heptane liquid and washed twice with 5 ml portions of heptane and then dried for one hour under a stream of nitrogen.

**Example 2:**

**Ethene-hexene co-polymerization**

Hexene ($C_6$") was used as co-monomer in the co-polymerization.

A 3 l autoclave reactor was used. 1800 ml (987 g, 17.0 mol) of iso-butane was introduced into the reactor as reaction medium. After adding the polymerization medium the temperature of the reactor system was set to 85 °C. The catalyst and the co-catalyst (EX 2: DEAC; Comparative Example CEX 1: TIBA) were fed into the reactor by means of two feed vessels that were connected in line to the reactor lid.

Inventive Example: DEAC as Cocatalyst:

45 mg of the catalyst were added into the upper feed vessel as 10wt%-solution in pentane and 2.80 ml DEAC (as 10 wt% heptane solution)

Comparative Example: TIBA as Cocatalyst

16 mg of the catalyst were added into the upper feed vessel as 10wt%-solution in pentane and 0.75 ml TIBA (as 20 wt% heptanes solution) for 1h co-poiymerization

24mg of the catalyst were added into the upper feed vessel as 10wt%-solution in pentane and 1,15ml TIBA (as 20 wt% heptanes solution) for 15min co-polymerization

The molar ratio of Al(of cocatalyst)/(V+Ti) was in all cases about 20.

The co-catalyst was first let into the reactor and the catalyst was after that introduced by pressurising the upper feed vessel to 30 bar with $N_2$ and there after letting the over pressure push in the catalyst in to the reactor. This manoeuvre was done three times. Two additional feed vessels were connected in series between the lid of the reactor and the ethene monomer feed line. 75 ml of hexene co-monomer was introduced into the lower feed vessel. The polymerization was started by opening the monomer feed line and thereby introducing both the co-monomer and the ethene monomer. Partial pressure of added ethene and $H_2$ was 7,2 bar (22.3 mmol $H_2$ added). A pressure of about 22.5 bar was maintained by the ethene feed trough out the test polymerization. The co-polymerization was carried out at 85 °C. The co-polymerization was continued for 15 and 60 min. The polymerization was stopped by venting off the monomer and the iso-butane.

**Polymerization Results and Polymer Analysis**

MFR and bulk density were measured from the co-polymers. Mw, Mn and PDI were measured by GPC and the $C_6$" % in the co-polymer was measured by IR as disclosed above. In addition the density was measured from all the co-polymers using known methods.

Table 1 shows the hexene-co-polymerization results with the procatalyst prepared as described in Example 1 in a time test series with DEAC (EX2) or TIBA (CEX1) as co-catalyst.

Table 1:

| COCATALYST | CEX1: TIBA | | EX1: DEAC | |
|---|---|---|---|---|
| **Polymerization time [min]** | 15 | 60 | 15 | 60 |
| **V:Ti [mol/mol]** | 50/50 | 50/50 | 50/50 | 50/50 |
| **kgPO/g.cat.hr** | 23,2 | 16,9 | 15,2 | 8,2 |
| **$MFR_5$** | 0,2 | n.d. | 0,22 | n.d. |
| **$MFR_{21}$** | 2,6 | 0,5 | 1,9 | 1,4 |
| **1-Hexene Cont., wt%** | 2,8 | 1 | 5,7 | 3,1 |
| **GPC Mw** | 244 000 | 318000 | 211 000 | 250 000 |
| **GPC Mn** | 70 600 | 91400 | 63 800 | 69 200 |
| **PDI** | 3,5 | 3,5 | 3,3 | 3,6 |

(continued)

| COCATALYST | CEX1: TIBA | | EX1: DEAC | |
|---|---|---|---|---|
| Density [kg/m$^3$] | 929,7 | 932,9 | 920,8 | 927,2 |
| n.d.......not determined | | | | |

**Claims**

1. Ziegler-Natta polymerization catalyst composition for the (co)polymerization of ethylene, wherein said catalyst composition comprises

   1) a solid procatalyst formed by contacting at least:

   a) a Mg-alcoholate compound of the formula (I):

   $Mg(OR^1)_{2-n}(R^1)_n$, wherein each $R^1$ independently represents a $C_1$-$C_{20}$ hydrocarbyl group and $0 \leq n < 2$ and may or may not be an integer;

   b) an aluminium compound of the formula (II)
   $Al(R^2)_m X_{3-m}$, wherein each $R^2$ independently represents an alkyl of up to 6 carbon atoms; each X is independently a halogen; $0 \leq m < 3$ and m and may or may not be an integer
   c) a vanadium compound and a titanium compound in portions such as to provide a molar ratio of V:Ti from 20:80 to 80:20
   in order to yield the solid procatalyst and

   2) a halogenated aluminium alkyl cocatalyst of the formula (III) $(C_1$-$C_4$-alkyl)$_p$-Al-$X_{3-p}$, wherein X is chlorine, bromine, iodine or fluorine and p is 1 or 2.

2. Ziegler-Natta catalyst polymerization catalyst composition according to claim 1, wherein the solid procatalyst is prepared by contacting at least

   [A] a solid magnesium aluminium complex containing magnesium, halogen and aluminium, said complex being obtained by
   (a1) adding a solution of a magnesium compound of the formula (I):

   $Mg(OR^1)_{2-n}(R^1)_n$, wherein each $R^1$ independently represents a $C_1$-$C_{20}$ hydrocarbyl group and $0 \leq n < 2$ and may or may not be an integer;
   to a solution of a compound of formula (II): $Al(R^2)_m X_{3-m}$, wherein each $R^2$ independently represents an alkyl of 1 to 6 carbon atoms; each X is independently a halogen, $0 \leq m < 3$ and m may or may not be an integer,

   (a2) separating the solidified reaction product from the reaction mixture and washing the product with a wash solution until a molar ratio of aluminium to magnesium has a value of at least 0.3
   [B] with a vanadium compound and a titanium compound in portions such as to provide a molar ratio of V:Ti from 20:80 to 80:20 in order to yield the procatalyst.

3. Ziegler-Natta catalyst polymerization catalyst composition according to any one of claims 1 to 2, wherein the magnesium hydrocarbyloxide of the formula (I) is a reaction mixture prepared by contacting in an inert hydrocarbon solvent a magnesium alkyl of formula $Mg(R^1)_2$ (IV), wherein each $R^1$ is independently as defined in claim 1, with an alcohol of formula $R^1OH$, wherein $R^1$ is as defined in claim 1.

4. Ziegler-Natta catalyst polymerization catalyst composition according to claim 3, wherein the magnesium alkyl of formula (IV) is butyloctylmagnesium and the alcohol $R^1OH$ is 2-ethyl-1-hexanol.

5. Ziegler-Natta catalyst polymerization catalyst composition according to any one of claims 1 to 4, wherein the aluminium compound of formula (II) is a dialkyl aluminium chloride selected from dimethyl aluminium chloride, diethyl aluminium chloride, diisobutyl aluminium chloride or an alkyl aluminium dichloride selected from ethyl aluminium dichloride or methyl aluminium dichloride.

6. Ziegler-Natta catalyst polymerization catalyst composition according to any one of claims 1 to 5, wherein the vanadium compound used is selected from vanadium tetrachloride, vanadyl trichloride, vanadyl tri-n-propoxide, vanadyl triisopropoxide and vanadium tetra-n-propoxid.

7. Ziegler-Natta catalyst polymerization catalyst composition according to any one of claims 1 to 6, wherein the titanium compound used is selected from titanium tetrachloride or titanium tetraisopropoxide.

8. Ziegler-Natta catalyst polymerization catalyst composition according to any one of claims 1 to 7, wherein in the solid procatalyst the molar ratio of Mg:(V+Ti) is between 10:1 to 1:10.

9. Ziegler-Natta catalyst polymerization catalyst composition according to any one of claims 1 to 8, wherein in the solid procatalyst the molar ratio of (V+Ti):Al is between 20:1 to 1:2.

10. Ziegler-Natta catalyst polymerization catalyst composition according to any one of claims 1 to 9, wherein in the solid procatalyst the molar ratio of V:Ti is from 25:75 to 75:25, preferably from 40:60 to 60:40 and more preferably 50:50.

11. Ziegler-Natta catalyst polymerization catalyst composition according to any one of claims 1 to 10, wherein the cocatalyst is selected from dimethyl aluminium chloride, diethyl aluminium chloride, diisobutyl aluminium chloride, ethyl aluminium dichloride, methyl aluminium dichloride or mixtures thereof.

12. Ziegler-Natta catalyst polymerization catalyst composition according to claim 1 to 11, wherein the cocatalyst is diethyl aluminium chloride.

13. Ziegler-Natta catalyst polymerization catalyst composition according to any one of claims 1 to 12, wherein the molar ratio between the aluminium in the cocatalyst and (V+Ti) of the procatalyst is preferably 1:1 - 100:1, more preferably 2:1 - 50:1 and most preferably 3:1 - 40:1.

14. Use of a catalyst system according to any one of claims 1 to 13 for the production of an ethylene copolymer, wherein ethylene and one or more comonomers selected from 1-butene, isobutene, 1-pentene, 1-hexene, 4-methyl-1-pentene, 1-heptene, 1-octene, 1-nonene, 1-decene, butadiene, 1,7-octadiene, 1,4-hexadiene and norbornene are copolymerized.

15. A process for producing linear low density polyethylene having a density between 900 and 935 kg/m$^3$, which process comprises:

    - introducing a procatalyst according to any one of claims 1 to 13 into the polymerization reactor
    - introducing the cocatalyst of the catalyst composition according to any one of claims 1 to 13 into the polymerization reactor
    - introducing ethylene, one or more alpha-olefin comonomer having 3 to 20 carbon atoms and optionally hydrogen into the polymerization reactor
    - maintaining said polymerization reactor in such conditions as to produce an ethylene copolymer having a density between 900 and 935 kg/m$^3$, and
    - recovering said ethylene copolymer;

said ethylene copolymer showing an improved comonomer composition distribution compared to ethylene copolymers produced with Ziegler-Natta catalyst polymerization catalyst compositions using non-halogenated cocatalysts.

**Patentansprüche**

1. Ziegler-Natta Polymerizations-Katalysatorzusammensetzung für die (Co)polymerisation von Ethylen, wobei die besagte Katalysatorzusammensetzung umfasst

    1) einen festen Prokatalysator, der gebildet wird durch das In-Kontaktbringen von wenigstens:

        a) einer Mg-Alkoholat-Verbindung mit der Formel (I):

# EP 2 289 950 B1

$Mg(OR^1)_{2-n}(R^1)_n$, wobei jeder $R^1$ unabhängig eine $C_1$-$C_{20}$ Hydrocarbylgruppe repräsentiert und $0 \leq n < 2$ und n eine ganze Zahl sein kann oder keine ganz Zahl sein kann;

b) einer Aluminiumverbindung mit der Formel (II):

$Al(R^2)_m X_{3-m}$, wobei jeder $R^2$ unabhängig ein Alkyl mit bis zu 6 Kohlenstoffatomen repräsentiert; jedes X unabhängig ein Halogen ist; $0 \leq m < 3$ und m eine ganze Zahl sein kann oder keine ganz Zahl sein kann;

c) einer Vanadiumverbindung und einer Titanverbindung in Anteilen, sodass ein molares Verhältnis von V:Ti von 20:80 bis 80:20 bereitgestellt ist um den festen Prokatalysator zu ergeben und

2) einen halogenierten Alyminiumalkylcokatalysator mit der Formel (III) $(C_1$-$C_4$-Alkyl$)_p$-Al-$X_{3-p}$, wobei X Chlor, Brom, Jod oder FLour und p 1 oder 2 ist.

2. Ziegler-Natta Polymerizations-Katalysatorzusammensetzung nach Anspruch 1, wobei der feste Prokatalysator hergestellt wird durch das In-Kontaktbringen von wenigstens

[A] einem festen Magnesium-Aluminium-Komplex, der Magnesium, Halogen und Aluminium enthält, wobei der besagte Komplex erhalten wird durch

(a1) Zugabe einer Lösung von einer Magnesiumverbindung mit der Formel (I):

$Mg(OR^1)_{2-n}(R^1)_n$, wobei jeder $R^1$ unabhängig eine $C_1$-$C_{20}$ Hydrocarbylgruppe repräsentiert und $0 \leq n < 2$ und n eine ganze Zahl sein kann oder keine ganz Zahl sein kann;
zu einer Lösung aus einer Verbindung mit der Formel (II):

$Al(R^2)_m X_{3-m}$, wobei jeder $R^2$ unabhängig ein Alkyl mit 1 bis 6 Kohlenstofatomen repräsentiert; jedes X unabhängig ein Halogen ist; $0 \leq m < 3$ und m eine ganze Zahl sein kann oder keine ganz Zahl sein kann;

(a2) Abtrennung des verfestigten Reaktionsprodukts von der Reaktionsmischung und Waschen des Produkts mit einer Waschlösung bis das molare Verhältnis von Aluminium zu Magnesium einen Wert von wenigstens 0,3 hat
[B] mit einer Vanadiumverbindung und einer Titanverbindung in Anteilen, sodass ein molares Verhältnis von V:Ti von 20:80 bis 80:20 bereitgestellt ist, um den festen Prokatalysator zu ergeben.

3. Ziegler-Natta Polymerizations-Katalysatorzusammensetzung nach einem der Ansprüche 1 bis 2, wobei das Magnesiumhydrocarbyloxid mit der Formel (I) eine Reaktionsmischung ist, die durch das In-Kontaktbringen in einem inerten Hydrocarbonlösungsmittel von einem Magnesiumalkyl mit der Formel $Mg(R^1)_2$ (IV), wobei jedes $R^1$ unabhängig wie in Anspruch 1 definiert ist, mit einem Alkohol mit der Formel $R^1OH$, wobei $R^1$ wie in Anspruch 1 definiert ist, hergestellt wird.

4. Ziegier-Natta Polymerizations-Katalysatorzusammensetzung nach Anspruch 3, wobei das Magnesiumalkyl mit der Formel (IV) Butyloctylmagnesium ist und der Alkohol $R^1OH$ 2-Ethyl-1-hexanol ist.

5. Ziegler-Natta Polymerizations-Katalysatorzusammensetzung nach einem der Ansprüche 1 bis 4, wobei die Aluminiumverbindung mit der Formel (II) ein Dialkylaluminiumchlorid ist, das ausgewählt ist aus Dimethylaluminiumchlorid, Diethylaluminiumchlorid, Diisobutylaluminiumchlorid oder einem Alkylaluminiumdichlorid, ausgewählt aus Ethylaluminiumdichlorid oder Methylaluminiumdichlorid.

6. Ziegier-Natta Polymerizations-Katalysatorzusammensetzung nach einem der Ansprüche 1 bis 5, wobei die verwendete Vanadiumverbindung ausgewählt ist aus Vanadiumtetrachlorid, Vanadyltrichlorid, Vanadyl-tri-n-propoxid, Vanadyl-triisopropoxid und Vanadium-tetra-n-propoxid.

7. Ziegler-Natta Polymerizations-Katalysatorzusammensetzung nach einem der Ansprüche 1 bis 6, wobei die verwendete Titanverbindung ausgewählt ist aus Titantetrachlorid oder Titantetraisopropoxid.

8. Ziegler-Natta Polymerizations-Katalysatorzusammensetzung nach einem der Ansprüche 1 bis 7, wobei in dem festen Prokatalysator das molare Verhältnis von Mg:(V+Ti) zwischen 10:1 1 bis 1:10 ist.

**14**

9. Ziegler-Natta Polymerizations-Katalysatorzusammensetzung nach einem der Ansprüche 1 bis 8, wobei in dem festen Prokatalysator das molare Verhältnis von (V+Ti):Al zwischen 20:1 bis 1:2 ist.

10. Ziegler-Natta Polymerizations-Katalysatorzusammensetzung nach einem der Ansprüche 1 bis 9, wobei in dem festen Prokatalysator das molare Verhältnis V:Ti von 25:75 bis 75:25, vorzugsweise von 40:60 bis 60:40 und besonders vorzugsweise 50:50 ist.

11. Ziegler-Natta Polymerizations-Katalysatorzusammensetzung nach einem der Ansprüche 1 bis 10, wobei der Cokatalysator ausgewählt ist aus Dimethylaluminiumchlorid, Diethylaluminiumchlorid, Diisobutylaluminiumchlorid, Ethylaluminiumdichlorid, Methylaluminiumdichlorid oder Mischungen davon.

12. Ziegler-Natta Polymerizations-Katalysatorzusammensetzung nach einem der Ansprüche 1 bis 11, wobei der Cokatalysator Diethylaluminiumchlorid ist.

13. Ziegler-Natta Polymerizations-Katalysatorzusammensetzung nach einem der Ansprüche 1 bis 12, wobei das molare Verhältnis zwischen dem Aluminium in dem Cokatalysator und (V+Ti) des Prokatalysators vorzugsweise 1:1 - 100:1, besonders vorzugsweise 2:1 - 50:1 und am meisten bevorzugt 3:1 - 40:1 ist.

14. Verwendung eines Katalysatorsystems nach einem der Ansprüche 1 bis 13 für die Herstellung eines Ethylencopolymers, wobei das Ethylen und ein oder mehrere Comonomere, ausgewählt aus 1-Buten, Isobuten, 1-Penten, 1-Hexen, 4-Methyl-1-penten, 1-Hepten, 1-Octen, 1-Nonen, 1-Decen, Butadien, 1,7-Octadien, 1,4-Hexadien und Norbornen, copolymerisiert werden.

15. Verfahren zur Herstellung eines linearen Polyethylens niederer Dichte, das eine Dichte zwischen 900 und 935 kg/m$^3$ hat, wobei das Verfahren_umfasst:

   - Einführen eines Prokatalysators nach einem der Ansprüche 1 bis 13 in den Polymerisationsreaktor
   - Einführen des Cokatalysators der Katalysatorzusammensetzung nach einem der Ansprüche 1 bis 13 in den Polymerisationsreaktor
   - Einführen von Ethylen, von einem oder mehr alpha-Olefin Comonomer, das 3 bis 20 Kohlenstoffatome hat, und optional von Wasserstoff in den Polymerisationsreaktor
   - Aufrechterhalten das besagten Polymerisationsreaktors in solchen Bedingungen, sodass ein Ethylencopolymer hergestellt wird, das eine Dichte zwischen 900 und 935 kg/m$^3$ hat, und
   - Bergen des besagten Ethylencopolymers;

   wobei das besagte Ethylencopolymer eine verbesserte Verteilung der Comonomerzusammensetzung verglichen mit Ethylencopolymeren aufweist, die mit Ziegler-Natta Polymerizations-Katalysatorzusammensetzungen unter Verwendung von nicht halogenierten Cokatalysatoren hergestellt werden.

**Revendications**

1. Composition de catalyseur de polymérisation de Ziegler-Natta pour la (co)polymérisation d'éthylène, ladite composition de catalyseur comprenant

   1) un procatalyseur solide formé par mise en contact au moins de :

      a) un composé alkylate de Mg de formule (I) :

         Mg $(OR^1)_{2-n}$ $(R^1)_n$, dans laquelle chaque $R^1$ représente indépendamment un groupe hydrocarbyle en $C_1$ à $C_{20}$ et $0 \leq n < 2$, n pouvant ou non être un entier ;

      b) un composé de l'aluminium de formule (II) :

         $Al(R^2)_m X_{3-m}$, dans laquelle chaque $R^2$ représente indépendamment un alkyle ayant jusqu'à 6 atomes de carbone ; chaque X est indépendamment un halogène ; $0 \leq m < 3$, m pouvant ou non être un entier ;

      c) un composé du vanadium et un composé du titane en des proportions telles que soit obtenu un rapport molaire V/Ti de 20/80 à 80/20 ;
afin d'engendrer le procatalyseur solide ; et

2) un cocatalyseur alkyl-aluminium halogéné de formule (III) (alkyle en $C_1$ à $C_4)_p$-Al-$X_{3-p}$ dans laquelle X est le chlore, le brome, l'iode ou le fluor et p vaut 1 ou 2.

2. Composition de catalyseur de polymérisation de Ziegler-Natta selon la revendication 1, dans laquelle le procatalyseur solide est préparé par mise en contact au moins de :

[A] un complexe de magnésium-aluminium solide contenant du magnésium, un halogène et de l'aluminium, ledit complexe étant obtenu par
(a1) addition d'une solution d'un composé du magnésium de formule (I) :

Mg $(OR^1)_{2-n}(R^1)_n$, dans laquelle chaque $R^1$ représente indépendamment un groupe hydrocarbyle en $C_1$ à $C_{20}$ et $0 \leq n < 2$, n pouvant ou non être un entier ;
à une solution d'un composé de formule (II) : $Al(R^2)_m X_{3-m}$, dans laquelle chaque $R^2$ représente indépendamment un alkyle ayant jusqu'à 6 atomes de carbone ; chaque X est indépendamment un halogène ; $0 \leq m < 3$, m pouvant ou non être un entier ;

(a2) séparation du produit réactionnel solidifié d'avec le mélange réactionnel et lavage du produit avec une solution de lavage jusqu'à ce que le rapport molaire de l'aluminium au magnésium ait une valeur d'au moins 0,3,
[B] avec un composé du vanadium et un composé du titane en des proportions telles que soit obtenu un rapport molaire V/Ti de 20/80 à 80/20 ;

afin d'engendrer le procatalyseur.

3. Composition de catalyseur de polymérisation de Ziegler-Natta selon l'une quelconque des revendications 1 et 2, dans lequel l'hydrocarbyloxyde de magnésium de formule (I) est un mélange réactionnel préparé par mise en contact, dans un solvant hydrocarboné inerte, d'un alkyl-magnésium de formule : $Mg(R^1)_2$ (IV), dans laquelle chaque $R^1$ est indépendamment tel que défini dans la revendication 1, avec un alcool de formule $R^1OH$, dans laquelle $R^1$ est tel que défini dans la revendication 1.

4. Composition de catalyseur de polymérisation de Ziegler-Natta selon la revendication 3, dans laquelle l'alkylmagnésium de formule (IV) est le butyloctyl-magnésium et l'alcool $R^1OH$ est le 2-éthyl-1-hexanol.

5. Composition de catalyseur de polymérisation de Ziegler-Natta selon l'une quelconque des revendications 1 à 4, dans lequel le composé de l'aluminium de formule (II) est un chlorure de dialkyl-aluminium choisi parmi le chlorure de diméthyl-aluminium, le chlorure de diéthyl-aluminium, le chlorure de diisobutyl-aluminium ou un dichlorure d'alkylaluminium choisi parmi le dichlorure d'éthyl-aluminium ou le dichlorure de méthyl-aluminium.

6. Composition de catalyseur de polymérisation de Ziegler-Natta selon l'une quelconque des revendications 1 à 5, dans laquelle le composé du vanadium utilisé est choisi parmi le tétrachlorure de vanadium, le trichlorure de vanadyle, le tri-n-propylate de vanadyle, le triisopropylate de vanadyle et le tétra-n-propylate de vanadium.

7. Composition de catalyseur de polymérisation de Ziegler-Natta selon l'une quelconque des revendications 1 à 6, dans laquelle le composé du titane utilisé est choisi parmi le tétrachlorure de titane ou le tétraisopropylate de titane.

8. Composition de catalyseur de polymérisation de Ziegler-Natta selon l'une quelconque des revendications 1 à 7, dans laquelle, dans le procatalyseur solide, le rapport molaire Mg/(V+Ti) est compris entre 10/1 et 1/10.

9. Composition de catalyseur de polymérisation de Ziegler-Natta selon l'une quelconque des revendications 1 à 8, dans laquelle, dans le procatalyseur solide, le rapport molaire (V+Ti)/Al est compris entre 20/1 et 1/2.

10. Composition de catalyseur de polymérisation de Ziegler-Natta selon l'une quelconque des revendications 1 à 9, dans laquelle, dans le procatalyseur solide, le rapport molaire V/Ti est de 25/75 à 75/25, de préférence de 40/60 à 60/40 et mieux encore de 50/50.

11. Composition de catalyseur de polymérisation de Ziegler-Natta selon l'une quelconque des revendications 1 à 10, dans laquelle le cocatalyseur est choisi parmi le chlorure de diméthyl-aluminium, le chlorure de diéthyl-aluminium, le chlorure de diisobutyl-aluminium, le dichlorure d'éthylaluminium, le dichlorure de méthyl-aluminium, et leurs mélanges.

**12.** Composition de catalyseur de polymérisation de Ziegler-Natta selon les revendications 1 à 11, dans laquelle le cocatalyseur est le chlorure de diéthyl-aluminium.

**13.** Composition de catalyseur de polymérisation de Ziegler-Natta selon l'une quelconque des revendications 1 à 12, dans laquelle le rapport molaire entre l'aluminium dans le cocatalyseur et (V+Ti) du procatalyseur est de préférence de 1/1 à 100/1, mieux encore de 2/1 à 50/1 et tout spécialement de 3/1 à 40/1.

**14.** Utilisation d'un système catalyseur selon l'une quelconque des revendications 1 à 13 pour la production d'un copolymère d'éthylène, dans laquelle de l'éthylène et un ou plusieurs comonomères choisis parmi le 1-butène, l'isobutène, le 1-pentène, le 1-hexène, le 4-méthyl-1-pentène, le 1-heptène, le 1-octène, le 1-nonène, le 1-décène, le butadiène, le 1,7-octadiène, le 1,4-hexadiène et le norbornène sont copolymérisés.

**15.** Procédé pour produire du polyéthylène basse densité linéaire ayant une masse volumique comprise entre 900 et 935 kg/m$^3$, lequel procédé comprend :

- l'introduction d'un procatalyseur selon l'une quelconque des revendications 1 à 13 dans le réacteur de polymérisation,
- l'introduction du cocatalyseur de la composition de catalyseur selon l'une quelconque des revendications 1 à 13 dans le réacteur de polymérisation,
- l'introduction d'éthylène, d'un ou plusieurs comonomères d'alpha-oléfine ayant 3 à 20 atomes de carbone et éventuellement d'hydrogène dans le réacteur de polymérisation,
- le maintien dudit réacteur de polymérisation dans des conditions telles que soit produit un copolymère d'éthylène ayant une masse volumique comprise entre 900 et 935 kg/m$^3$, et
- la récupération dudit copolymère d'éthylène ;

ledit copolymère d'éthylène présentant une meilleure distribution de composition des comonomères que celle des copolymères d'éthylène produits avec des compositions de catalyseur de polymérisation de Ziegler-Natta utilisant des cocatalyseurs non halogénés.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009027379 A
- WO 2004055068 A
- WO 03106510 A
- US 4582816 A
- US 3405109 A
- US 3324093 A
- EP 479186 A
- US 5391654 A
- EP 0517868 A
- EP 0887379 A
- US 3374211 A
- US 3242150 A
- EP 1310295 A
- EP 891990 A
- EP 1415999 A
- EP 1591460 A
- EP 1860125 A
- EP 707513 A
- EP 1633466 A
- EP 1484343 A
- WO 9704015 A

**Non-patent literature cited in the description**

- **GELDART.** Gas Fluidization Technology. J.Wiley & Sons, 1986